# DEMANDE DE BREVET EUROPEEN

(11) **EP 4 711 341 A1**
(43) Date de publication de la demande: **18.03.2026**
(21) Numéro de dépôt: 24306520.8
(22) Date de dépôt: 16.09.2024
(51) Int. Cl.: C02F 1/66, C02F 1/76, F16K 11/08, C02F 103/42, C02F 1/00

(54) **DISPOSITIF D'INJECTION DE LIQUIDE TRAITEMENT AMELIORE POUR EAU DE PISCINE**

(71) Demandeur: Hamelin, Henri, 24290 Coly-Saint-Amand (FR)
(72) Inventeur: Hamelin, Henri, 24290 Coly-Saint-Amand (FR)
(74) Mandataire: Tranvouez, Edern Morgan

(57) **Abrégé**

L'invention concerne un dispositif d'injection de liquides de traitement (1) pour une installation de traitement d'eau de piscine, le dispositif d'injection de liquides de traitement comprenant un circuit de liquide basique (2,3,5) et un circuit de liquide acide (6,7,8), des premier (4) et deuxième (8) injecteurs connectés fluidiquement à l'un et l'autre des circuits de liquide acide et de liquide basique, dans lequel le dispositif d'injection comporte une vanne quatre voies (30) entre les circuits de liquide acide, d'une part, et de liquide basique et les premier et deuxième injecteurs, d'autre part, la vanne quatre voies étant agencée de sorte à permettre d'injecter alternativement du liquide acide et du liquide basique dans chacun des premier et deuxième injecteurs.

## Description

### DOMAINE TECHNIQUE DE L'INVENTION

L'invention concerne, de façon générale, le domaine technique des traitements de l'eau des piscines privées ou publiques. En particulier, l'invention concerne un dispositif d'injection de liquides de traitement, notamment de chlore et d'un acide (PH-).

### ÉTAT DE LA TECHNIQUE ANTÉRIEURE

Aujourd'hui, les dispositifs d'injection de chlore liquide et de PH- liquide sont généralement pilotés de sorte à permettre une régulation automatique du traitement de l'eau de piscine. Ils sont intégrés au sein d'une installation de traitement de l'eau de piscine.

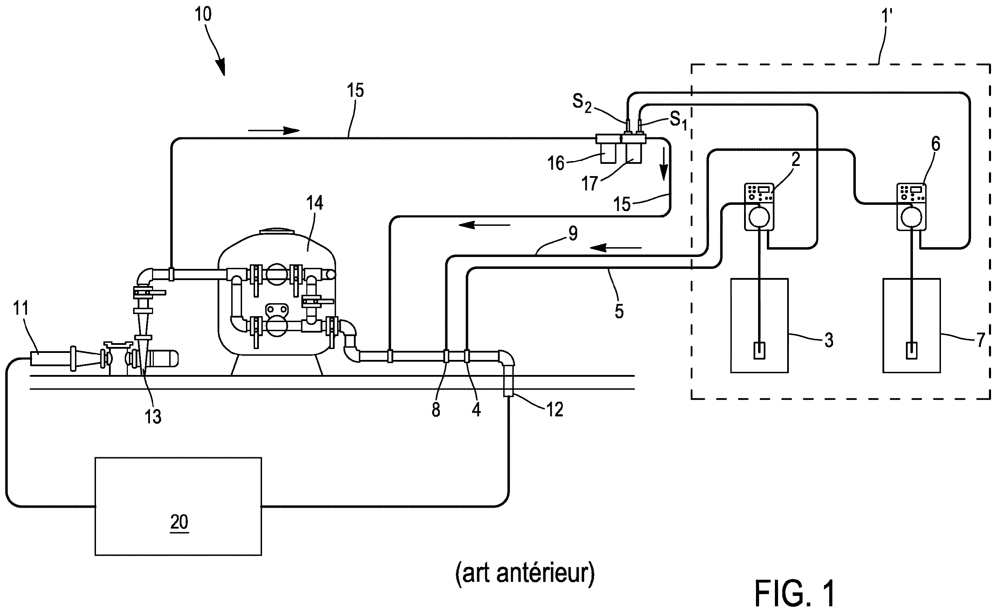

Un exemple d'installation de traitement d'eau de piscine existant est illustré à la figure 1. L'installation de traitement d'eau de piscine 10 est connectée fluidiquement à un bassin 20 de piscine contenant de l'eau de piscine à traiter. Actuellement, l'installation de traitement d'eau de piscine 10 comporte un dispositif d'injection de liquides de traitement 1'. Ce dernier comprend un circuit d'alimentation en liquide basique comprenant un réservoir de liquide basique 3, usuellement du chlore liquide, et une première pompe d'injection 2 puisant dans le réservoir de liquide basique 3 et injectant ledit liquide basique via une première tubulure 5, le circuit d'alimentation en liquide basique étant relié fluidiquement à un premier injecteur 4 pour injecter le liquide basique dans l'eau de piscine en sortie de l'installation de traitement d'eau de piscine 10, la première pompe d'injection 2 étant pilotée par une sonde 51 mesurant le liquide basique dans l'eau de piscine en amont de le premier injecteur 4. D'autre part, le dispositif d'injection de liquides de traitement 1' comprend un circuit d'alimentation en liquide acide comportant un réservoir de liquide acide 7, usuellement un acide liquide comme de l'acide sulfurique, et une deuxième pompe d'injection 6 puisant dans le réservoir de liquide acide 7 et injectant ledit liquide acide via une deuxième tubulure 9, le circuit d'alimentation en liquide acide étant relié fluidiquement à un deuxième injecteur 8 pour injecter le liquide acide dans l'eau de piscine en sortie de l'installation de traitement d'eau de piscine 10, la deuxième pompe d'injection 3 étant pilotée par une sonde S2 mesurant le PH dans l'eau de piscine en amont du deuxième injecteur 8. Les premier 4 et deuxième 8 injecteurs sont positionnés de manière adjacente l'un de l'autre.

Toutefois, de telles installations de traitement d'eau de piscine 10 rencontrent des problèmes récurrents d'obturation du premier injecteur 4 par des cristaux de calcification, dus à la nature du liquide basique comme le chlore, une température de l'eau de piscine traversant l'installation de traitement d'eau de piscine 10 ainsi qu'une pression exercée pour l'injection du liquide basique par la première pompe d'injection 2. Cette obturation entraîne alors une augmentation de la pression dans la première tubulure 5, provoquant un percement, un détachement et même parfois un éclatement, et conduisant inexorablement à une fuite incontrôlée de liquide basique dans l'espace local technique où est installée l'installation de traitement d'eau de piscine 10.

Ces incidents fréquents entraînent des conséquences graves et trop souvent irrémédiables, comme une oxydation et une dégradation des installations présentes dans l'espace à proximité de la première tubulure 5, comme des risques de brûlures chimiques et des émanations de gaz toxiques, comme une pollution due à la diffusion de liquide basique avec écoulement et rejet dans le sol. In fine, cela entraîne des coûts élevés de maintenances manuelles obligatoires et une gestion des accidents induits, ainsi qu'une désorganisation due à une indisponibilité de la piscine.

### EXPOSÉ DE L'INVENTION

L'invention vise à remédier à tout ou partie des inconvénients de l'état de la technique en proposant notamment une solution permettant d'éviter une obturation de l'injecteur de liquide basique.

Pour ce faire, il est proposé, selon un premier aspect de l'invention, un dispositif d'injection de liquides de traitement pour une installation de traitement d'eau de piscine , le dispositif d'injection de liquides de traitement comprenant un circuit d'alimentation en liquide basique et un circuit d'alimentation en liquide acide, des premier et deuxième injecteurs chacun connecté fluidiquement à l'un ou à l'autre des circuits d'alimentation en liquide acide et en liquide basique de sorte à permettre une injection de liquide acide ou basique dans une conduite de traitement des eaux de l'installation de traitement d'eau de piscine, dans lequel le dispositif d'injection comporte en outre une vanne quatre voies entre les circuits de liquide acide, d'une part, et de liquide basique et les premier et deuxième injecteurs, d'autre part, la vanne quatre voies étant agencée de sorte à permettre d'injecter alternativement du liquide acide et du liquide basique dans chacun des premier et deuxième injecteurs.

Selon un mode de réalisation, la vanne quatre voies est une vanne quatre voies en « L », la vanne quatre voies comprenant quatre ports où le port est fluidiquement connecté au port) et où le port est connecté fluidiquement au port.

Selon un mode de réalisation le dispositif d'injection de liquides de traitement comporte une motorisation de la vanne quatre voies.

Selon un mode de réalisation, le circuit d'alimentation en liquide basique comporte une première pompe d'injection, et le circuit d'alimentation en liquide acide comporte une deuxième pompe d'injection.

Selon un mode de réalisation, les première et deuxième pompes d'injection sont des pompes péristaltiques ou des pompes électromagnétiques.

Selon un autre aspect de l'invention, il est prévu une installation de traitement d'eau de piscine comportant une pompe de circulation, un système de filtration et une conduite de sortie en aval de du système de filtration, dans laquelle l'installation comporte un dispositif d'injection selon l'invention, les premier et deuxième injecteurs étant positionnés sur la conduite de sortie qui forme la conduite de traitement des eaux de l'installation de traitement d'eau de piscine.

Selon un mode de réalisation, l'installation comporte en outre un dispositif d'analyse de l'eau positionné en amont des premier et deuxième injecteurs.

Selon un mode de réalisation, le dispositif d'analyse de l'eau comporte une sonde mesurant le liquide basique dans l'eau et une sonde mesurant un PH dans l'eau, les sondes permettant de piloter le dispositif d'injection.

Selon un autre aspect de l'invention, il est prévu une piscine comportant un bassin, dans laquelle la piscine comporte une installation de traitement selon l'invention connectée fluidiquement au bassin.

Selon un autre aspect de l'invention, il est prévu un procédé de pilotage d'un dispositif d'injection selon l'invention, dans lequel le procédé comporte des étapes de
a) mise en configuration de la vanne quatre voies selon une première configuration où le circuit d'alimentation en liquide basique est connecté au premier injecteur et le circuit d'alimentation en liquide acide est connecté au deuxième injecteur; puis,
b) fonctionnement dans la configuration issue de l'étape a) du dispositif d'injection durant une première durée ; puis,
c) mise en configuration de la vanne quatre voies selon une deuxième configuration où le circuit d'alimentation en liquide basique est connecté au deuxième injecteur et le circuit d'alimentation en liquide acide est connecté au premier injecteur puis,
d) fonctionnement dans la configuration issue de l'étape c) du dispositif d'injection durant une deuxième durée ; puis,
e) retour à l'étape a).

### BRÈVE DESCRIPTION DES FIGURES

D'autres caractéristiques et avantages de l'invention ressortiront à la lecture de la description qui suit, en référence aux figures annexées, qui illustrent :
- la figure 1 est une vue schématique d'une installation de traitement d'eau de piscine selon l'art antérieur;
- la figure 2 est une vue schématique d'un dispositif d'injection de liquides de traitement selon l'invention dans une première configuration de fonctionnement ;
- la figure 3 est une vue schématique du dispositif de la figure 2 dans une deuxième configuration de fonctionnement ;
- la figure 4 est une schématique de l'intérieur d'une vanne L afin d'illustré le changement de configuration de cette dernièr ; et
- La figure 5 est un logigramme d'un procédé d'utilisation du dispositif des figures 2 et 3.

Pour plus de clarté, les éléments identiques ou similaires sont repérés par des signes de référence identiques sur l'ensemble des figures.

### DESCRIPTION DÉTAILLÉE D'UN MODE DE RÉALISATION

La figure 1 illustre une installation de traitement d'eau de piscine 10 décrite rapidement dans le préambule de la description et que nous allons brièvement décrire en détail.

De manière connue en soi, l'installation de traitement d'eau de piscine 10 comporte une conduite d'aspiration 11 permettant de connecter fluidiquement l'installation de traitement d'eau de piscine 10 à un bassin de piscine 20 de sorte à permettre une aspiration de l'eau de piscine à traiter. Pour cela, l'installation de traitement d'eau de piscine 10 comporte une pompe de circulation 13 connectée à la conduite d'aspiration 11. En sortie de la pompe de circulation 13, l'installation de traitement d'eau de piscine 10 comprend un système de filtration 14 en sortie duquel l'installation de traitement d'eau de piscine 10 comporte une conduite de retour 12 connectée fluidiquement à au bassin de piscine 20 afin de réinjecter dans ledit bassin de piscine 20 l'eau de piscine traitée.

De plus, l'installation de traitement d'eau de piscine 10 comporte une tubulure de dérivation 15 connectée, d'une part, entre la pompe de circulation 13 et le système de filtration 14 et, d'autre part, en aval du système de filtration 14. La tubulure de dérivation 15 permet d'alimenter en eau de piscine (non traitée) à un dispositif d'analyse de l'eau de l'installation de traitement d'eau de piscine 10. Le dispositif d'analyse de l'eau comporte successivement un filtre 16 et une chambre d'analyse 17 sur laquelle sont positionnées les sondes S1 mesurant le liquide basique et S2 mesurant le PH.

ici, les premier 4 et deuxième 8 injecteurs sont positionnés sur la conduite de retour 12 en aval du système de filtration 14 et de la tubulure de dérivation 15.

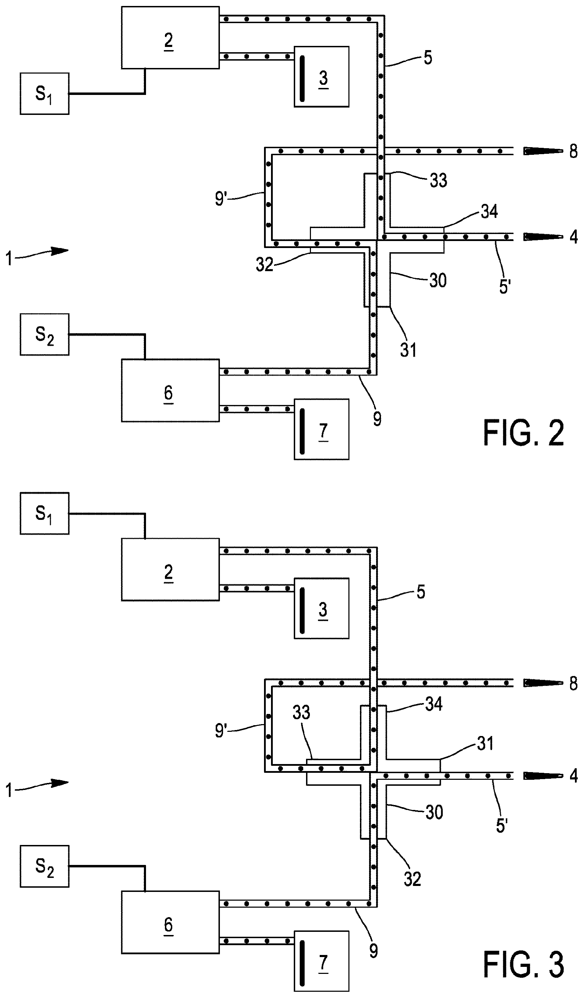

En référence maintenant aux figures 2 et 3, nous allons maintenant décrire un dispositif d'injection de liquides de traitement 1 selon l'invention.

Le dispositif d'injection de liquides de traitement 1 selon l'invention est similaire au dispositif d'injection de liquides de traitement 1' de l'art antérieur et décrit dans le préambule de la description. Le dispositif d'injection de liquides de traitement 1 selon l'invention s'en différencie par le fait que le dispositif d'injection de liquides de traitement 1 selon l'invention comporte une vanne quatre voies 30 positionnée sur les première 5 et deuxième 9 tubulures qui sont alors connectées à la vanne quatre voies 30. Le dispositif d'injection de liquides de traitement 1 selon l'invention comprend une première tubulure de sortie 5' connectant fluidiquement la vanne quatre voies 30 au premier injecteur 4 et une deuxième tubulure de sortie 9' connectant la vanne quatre voies 30 au deuxième injecteur 8.

La vanne quatre voies 30 est une vanne quatre voies en « L» et comporte quatre ports 31,32,33,34. Au sein de la vanne quatre voies 30, cette dernière est agencée de sorte que les ports 31 et 32 sont connectés fluidiquement l'un à l'autre, d'une part, et, d'autre part, que les ports 33 et 34 sont connectés fluidiquement l'un à l'autre.

Dans une première configuration illustrée à la figure 2, le port 33 est connecté à la première tubulure 5. Le port 34 est connecté à la première tubulure de sortie 5'. Ainsi la première pompe d'injection 2 est connectée fluidiquement au premier injecteur 4 : le liquide basique est alors injecté dans la conduite de sortie 12 de l'installation de traitement d'eau de piscine 10 par le premier injecteur 4. D'un autre côté, le port 31 est connecté à la deuxième tubulure 9. Le port 32 est connecté à la deuxième tubulure de sortie 9'. Ainsi la deuxième pompe d'injection 6 est connectée fluidiquement au deuxième injecteur 9 : le liquide acide est alors injecté dans la conduite de sortie 12 de l'installation de traitement d'eau de piscine 10 par le deuxième injecteur 8.

Dans une deuxième configuration illustrée à la figure 3, la vanne quatre voies 30 a effectué un quart de tour dans le sens inverse des aiguilles d'une montre. Dans cette deuxième configuration, le port 34 est connecté à la première tubulure 5. Le port 33 est connecté à la deuxième tubulure de sortie 9'. Ainsi la première pompe d'injection 2 est connectée fluidiquement au deuxième injecteur 8 : le liquide basique est alors injecté dans la conduite de sortie 12 de l'installation de traitement d'eau de piscine 10 par le deuxième injecteur 8. D'un autre côté, le port 32 est connecté à la deuxième tubulure 9. Le port 31 est connecté à la première tubulure de sortie 5'. Ainsi la deuxième pompe d'injection 6 est connectée fluidiquement au premier injecteur 4 : le liquide acide est alors injecté dans la conduite de sortie 12 de l'installation de traitement d'eau de piscine 10 par le premier injecteur 4.

Si la vanne quatre voies 30 effectue de nouveau un quart de tour dans le même sens de rotation qu'entre les première et deuxième configurations précédentes, nous arrivons à une troisième configuration similaire à la première configuration avec le port 31 connecté à la première tubulure 5, le port 32 connecté à la première tubulure de sortie 5', le port 33 connecté à la deuxième tubulure 9 et le port 34 connecté à la deuxième tubulure de sortie 9'.

Si la vanne quatre voies 30 effectue de nouveau encore un quart de tour dans le même sens de rotation qu'entre les première et deuxième configurations précédentes, nous arrivons à une quatrième configuration similaire à la deuxième configuration avec le port 32 connecté à la première tubulure 5, le port 31 connecté à la deuxième tubulure de sortie 9', le port 34 connecté à la deuxième tubulure 9 et le port 33 connecté à la première tubulure de sortie 5'.

Ainsi l'utilisation de la vanne quatre voies 30 du dispositif d'injection de liquides de traitement 1 selon l'invention permet de passer entre la première/troisième configuration et la deuxième/quatrième configuration. Ainsi à chaque quart de tour effectué par la vanne quatre voies 30, il y a une inversion des injections réalisées par les premier 4 et deuxième 8 injecteurs qui alternativement vont injecter le liquide basique et le liquide acide. Par conséquent, la formation de cristaux de calcification dans les injecteurs et donc leur obturation. En effet, le liquide acide agit comme autonettoyant décapant, éliminant les cristaux de calcification et assurant le bon fonctionnement des injecteurs.

La vanne quatre voies 30 peut être manipulée manuellement régulièrement. En variante de réalisation, la vanne quatre voies 30 est asservie par une motorisation pour assurer un fonctionnement d'inversion cadencée automatique.

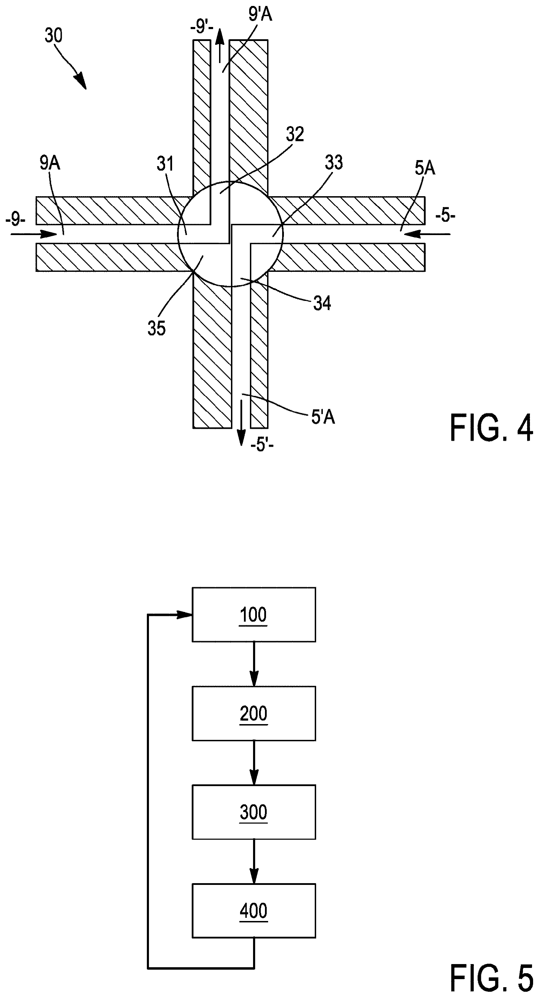

On notera que si sur les figures 2 et 3 il est montré d'une manière schématique que l'ensemble de la vanne quatre voies 30 tourne, dans une configuration usuelle d'une vanne en L, illustrée sur la figure 4, seule une partie centrale 34 est amenée à être déplacée. Selon une telle configuration, alternative à celle illustrée sur les figures 2 et », le reste de la vanne quatre voies 30, incluant les ports de connexion 5A, 5'A, 9A, 9'A, est statique. De cette manière, les ports de connexion 5A, 5'A, 9A, 9'A peuvent être connecté respectivement à la première tubulure 5, la première tubulure de sortie 5', la deuxième tubulure 9 et la deuxième tubulure de sortie 9'A, la rotation d'un quart de tour de la partie centrale (ici une rotation dans le sens horaire, contrairement à ce qui est montré pour le passage de la figure 2 à 3), permettant de modifier la circulation de fluide entre les différents ports de connexion 5A, 5'A, 9A, 9'A. Ainsi, dans la configuration illustrée dans la figure 4, les ports de connexion 5A et 9A d'entrée sont respectivement connectés aux ports de connexion 5'A et 9'A. Lors de la rotation suivante, conformément à l'invention, les ports de connexion 5A et 9A d'entrée sont alors respectivement connectés aux ports de connexion 9'A et 5'A.

Cette configuration montrée sur la figure 4 permet ainsi de montrer qu'une vanne en L telle qu'utilisée dans le présent mode de réalisation peut aussi bien fonctionner avec une permutation des jonctions fluidiques qu'elle fournie aussi bien dans un sens anti-horaire, qu'un sens horaire ceci sans que l'on sorte du cadre de l'invention.

Les première 2 et deuxième 6 pompes d'injection sont des pompes péristaltiques ou des pompes électromagnétiques, ou tout autre type de pompes compatibles avec des liquides acides et basiques utilisés couramment pour le traitement d'eau de piscine.

Un procédé de pilotage d'un dispositif d'injection de liquides de traitement 1 selon l'invention tel que précédemment décrit comporte une première étape 100 de mise en configuration de la vanne quatre voies 30 selon l'une parmi les première et troisième configurations précédentes, puis une deuxième étape 200 de fonctionnement dans la configuration issue de la première étape du dispositif d'injection de liquides de traitement 1 selon l'invention durant une première durée, par exemple sept jours, puis une troisième étape 300 de mise en configuration de la vanne quatre voies 30 selon l'une parmi les deuxième et quatrième configurations précédentes, puis une quatrième étape 400 de fonctionnement dans la configuration issue de la troisième étape du dispositif d'injection de liquides de traitement 1 selon l'invention durant une deuxième durée qui peut être la même ou différente de celle de la deuxième étape. Le procédé reprend ensuite à la première étape 100.

Il ressort de ce qui précède que l'utilisation d'un dispositif d'injection de liquides de traitement 1 selon l'invention au sein d'une installation de traitement d'eau de piscine 10 permet de maintenir ainsi une qualité optimale de l'eau des piscines tout en préservant le persnnel, l'environnement, les locaux techniques des dangers liés aux fuites, et permettant des économies substantielles de maintenance.

Naturellement, l'invention est décrite dans ce qui précède à titre d'exemple. Il est entendu que la personne de l'art est à même de réaliser différentes variantes de réalisation de l'invention sans pour autant sortir du cadre de l'invention.

Il est souligné que toutes les caractéristiques, telles qu'elles se dégagent pour une personne de l'art à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Dispositif d'injection de liquides de traitement (1) pour une installation de traitement d'eau de piscine (10), le dispositif d'injection de liquides de traitement comprenant un circuit d'alimentation en liquide basique (2,3,5) et un circuit d'alimentation en liquide acide (6,7,8), des premier (4) et deuxième (8) injecteurs chacun connecté fluidiquement à l'un ou à l'autre des circuits d'alimentation en liquide acide et en liquide basique de sorte à permettre une injection de liquide acide ou basique dans une conduite de traitement des eaux de l'installation de traitement d'eau de piscine (10), dans lequel le dispositif d'injection comporte en outre une vanne quatre voies (30) entre les circuits de liquide acide, d'une part, et de liquide basique et les premier et deuxième injecteurs, d'autre part, la vanne quatre voies étant agencée de sorte à permettre d'injecter alternativement du liquide acide et du liquide basique dans chacun des premier et deuxième injecteurs.

2. Dispositif selon la revendication 1, dans lequel la vanne quatre voies est une vanne quatre voies en « L », la vanne quatre voies comprenant quatre ports (31,32,33,34) où le port (31) est fluidiquement connecté au port (32) et où le port (33) est connecté fluidiquement au port (34).

3. Dispositif selon l'une des revendications 1 à 2, dans lequel le dispositif d'injection de liquides de traitement (1) comporte une motorisation de la vanne quatre voies.

4. Dispositif selon l'une des revendications 1 à 3, dans lequel le circuit d'alimentation en liquide basique comporte une première pompe d'injection (2), et le circuit d'alimentation en liquide acide comporte une deuxième pompe d'injection (6).

5. Dispositif selon la revendication 4, dans lequel les première et deuxième pompes d'injection sont des pompes péristaltiques ou des pompes électromagnétiques.

6. Installation de traitement d'eau de piscine (10) comportant une pompe de circulation (13), un système de filtration (14) et une conduite de sortie (15) en aval de du système de filtration, dans laquelle l'installation comporte un dispositif d'injection selon l'une des revendications 1 à 5, les premier et deuxième injecteurs étant positionnés sur la conduite de sortie qui forme la conduite de traitement des eaux de l'installation de traitement d'eau de piscine (10).

7. Installation de traitement selon la revendication 6, dans laquelle l'installation comporte en outre un dispositif d'analyse de l'eau (15,16,17,51,52) positionné en amont des premier et deuxième injecteurs.

8. Installation de traitement selon la revendication 7, dans laquelle le dispositif d'analyse de l'eau comporte une sonde (51) mesurant le liquide basique dans l'eau et une sonde (S2) mesurant un PH dans l'eau, les sondes (S1,S2) permettant de piloter le dispositif d'injection.

9. Piscine comportant un bassin (20), dans laquelle la piscine comporte une installation de traitement selon l'une des revendications 6 à 8 connectée fluidiquement au bassin.

10. Procédé de pilotage d'un dispositif d'injection selon l'une des revendications 1 à 5, dans lequel le procédé comporte des étapes de
a) mise en configuration (100) de la vanne quatre voies (30) selon une première configuration où le circuit d'alimentation en liquide basique est connecté au premier injecteur (4) et le circuit d'alimentation en liquide acide est connecté au deuxième injecteur (8) ; puis,
b) fonctionnement (200) dans la configuration issue de l'étape a) du dispositif d'injection durant une première durée ; puis,
c) mise en configuration (200) de la vanne quatre voies (30) selon une deuxième configuration où le circuit d'alimentation en liquide basique est connecté au deuxième injecteur (8) et le circuit d'alimentation en liquide acide est connecté au premier injecteur (4) ; puis,
d) fonctionnement (400) dans la configuration issue de l'étape c) du dispositif d'injection durant une deuxième durée ; puis,
e) retour à l'étape a).

11. Procédé selon la revendication 10, dans lequel les première et deuxième durées sont prédéterminées et préférentiellement identiques.
